(19)

Europäisches
Patentamt
European
Patent Office
Office européen
des brevets

(11) **EP 2 086 255 B1**

(12) **EUROPEAN PATENT SPECIFICATION**

(45) Date of publication and mention
of the grant of the patent:
**03.11.2010 Bulletin 2010/44**

(51) Int Cl.:
*H04W 16/00* (2009.01)   *H04B 1/69* (2006.01)

(21) Application number: **08368002.5**

(22) Date of filing: **01.02.2008**

(54) **Process for sensing vacant sub-space over the spectrum bandwidth and apparatus for performing the same**

Verfahren zum Erfassen von freiem Unterraum in der Spektrumbandbreite und Apparat zu dessen Durchführung

Procédé pour la détection de sous-espace vacant sur la bande passante du spectre et appareil pour réaliser le procédé

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**05.08.2009 Bulletin 2009/32**

(73) Proprietor: **Institut Eurecom
06904 Sophia-Antipolis (FR)**

(72) Inventor: **Aawatif Menouni Hayar
06220 Golfe Juan (FR)**

(74) Representative: **Schuffenecker, Thierry
120 Chemin de la Maure
06800 Cagnes sur Mer (FR)**

(56) References cited:
WO-A-2007/043827    WO-A-2007/094604
US-A1- 2006 286 934

• YONGHONG ZENG ET AL: "Covariance Based Signal Detections for Cognitive Radio" NEW FRONTIERS IN DYNAMIC SPECTRUM ACCESS NETWORKS, 2007. DYSPAN 2007. 2ND IEEE INTERNATIONAL SYMPOSIUM ON, IEEE, PI, 1 April 2007 (2007-04-01), pages 202-207, XP031095620 ISBN: 978-1-4244-0663-0
• YONGHONG ZENG ET AL: "Maximum-Minimum Eigenvalue Detection for Cognitive Radio" PERSONAL, INDOOR AND MOBILE RADIO COMMUNICATIONS, 2007. PIMRC 2007. IE EE 18TH INTERNATIONAL SYMPOSIUM ON, IEEE, PI, 1 September 2007 (2007-09-01), pages 1-5, XP031168289 ISBN: 978-1-4244-1143-6
• MAJED HADDAD ET AL: "Spectral Efficiency of Cognitive Radio Systems" GLOBAL TELECOMMUNICATIONS CONFERENCE, 2007. GLOBECOM '07. IEEE, IEEE, PI, 1 November 2007 (2007-11-01), pages 4165-4169, XP031196720 ISBN: 978-1-4244-1042-2

## Description

### Technical field

The present invention relates to radio communication and more particularly to a process for sensing vacant bands over the spectrum bandwidth and an apparatus for performing the same.

### Background Art

Wireless telecommunications are spreading rapidly in the world. With the demand for additional bandwidth increasing due to both existing and new services, public authorities, such as the Federal Communications Commission (F.C.C.) in the USA, are concerned with the problem of spectrum scarcity.

Practical measurements have shown that, in fact, license spectrum shows to be relatively unused across time and frequency. Such observations have resulted in new reflections concerning to the use of the spectrum.

In a recent report, the FCC has promoted the idea of a significant increase of the efficiency of the use of the spectrum by promoting the concept of dynamic access to the radio spectrum. Contrary to an static access, the concept of dynamic access should provide more flexibility by allowing co-existence of different users on the same spectrum. In the so-called Hierarchical Access Model, two distinctive categories of users of the spectrum are defined: primary users having licensed priority rights on the spectrum and secondary users which could get temporary access to the same spectrum with limited interference, provided that they detect that such spectrum is available for use... For the time being, the spectrum is shared between different wireless equipments on the basis of fixed operating frequencies and bandwidth and pre-assigned spectrum allocations as well as accurate rules and limitations on the power emission of said equipments.

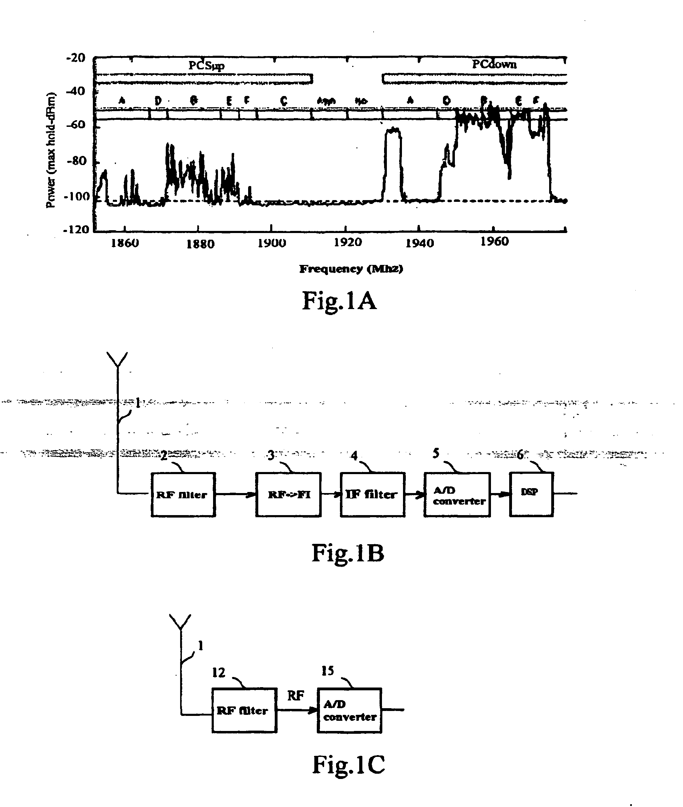

Figure 1 shows a typical illustration of the organization of a spectrum.

This results in the fact that certain areas of the spectrum are subject to an extensive use while a significant area of the spectrum still remains unused.

In order to increase the efficiency of the use of a given spectrum, there is a need for an efficient mechanism for sensing the availability of the spectrum bandwidth and more particularly for sensing vacant sub-band over the spectrum bandwidth.

Some Spectrum sensing techniques are already known for detecting the vacant space within a spectrum band. Those known techniques can be shared between, so-called energy detection techniques, and feature detection techniques.

The first techniques known in the art are energy detection techniques are described in document "Energy detection of unknown deterministic signals", by H.

Urkowitz, Proceeding of the IEEE, Vol. 55, n°4, pp. 523-531, Apr. 1967. Such techniques results in some unknown or changing noise levels and interference. Moreover it has been shown that such energy detection techniques, while achieving detection of signal, can not differentiate between modulated signals, noise and interference. In particularly, this first technique does not provide satisfaction for direct-sequence or frequency hopping signals, or whenever the signal is varying with time;

Second known techniques are discussed in prior art document "Statistical tests for presence of cyclostationarity" , A. V. Dandwat and GF. B. Giannakis, IEEE Transactions on Signal Processing, Vol. 42, Issue 9, Sept. 1994, pp. 2355-2369. Those techniques provides better results but show to be much more complex and require high level of computing resources.

In a document entitled "Cognitive Radio Sensing Information-Theoretic Criteria based" IEEE conference CrownCom 2007, 2nd International Conference on Cognitive Radio Oriented Wireless Networks and Communications, August 1-3, 2007, Orlando, USA), the inventor of the present application disclosed the possible use of an alternative technique for sensing spectrum activity.and detecting vacant sub-bands in the spectrum based on an analysis of the dimension of the sub space of the received signal. To achieve this, it has been suggested to track the number of significant eigenvalues, as this number could provide an indication of the presence of signal or noise.

However, the above mentioned article was limited to the band detection within a RF demodulated frame and, moreover, was not per se adapted to the blind detection.

There is a need for an efficient mechanism providing a useful solution to the technical problem of achieving blind sensing vacant sub-space.

Such is the object of the present invention

### Summary of the invention

It is an object of the present invention to provide a process for achieving detection of vacant sub-space of the spectrum in order to allow secondary users get access to a spectrum normally licensed to Primary users.

It is another object of the present invention to provide an algorithm providing blind sensing of vacant sub-space.

The invention achieves those goals by means of a process for sensing vacant sub-space over the spectrum bandwidth of a received signal which comprises the steps of:

- sampling and storing samples representative of the received signal;
- arranging said samples in a windows having a predetermined size;
- executing a loop for computing a covariance matrix for the purpose of the determination of the significant eigenvalues as well as the dimension of the subspace represented by the number of significant eigenvalues;

- computing one value of the scale of confidence by analyzing the likelihood between the distribution of the received signal and the distribution of noise;
- reiterating the loop until the completion of the whole scale of confidence;
- processing said scale of confidence in order to derive one threshold value corresponding to one dimension which can be used for distinguishing between areas presumed to be vacant and areas presumed to be subject to a signal

In one embodiment, the samples are representative of temporal samples.

Alternatively, the samples are frequency samples.

Preferably, the computation of the scale of confidence is performed based on a noise distribution assumed to be Gaussian (Gaussian for samples and Rayleigh for the magnitude of samples)

In one particular embodiment, the decision threshold is computed as follows:

- the maximum of the scale of confidence will determine the border of one vacant band (reference band).
- dividing the spectrum in bands with respect to the reference band,
- determining the maximum and the minimum values of signal dimension corresponding to the maximum and minimum values of the scale of the confidence;
- returning corresponding dimensions, respectively $D_{max}$ and $D_{min}$ of the significant sub-space;
- computing said threshold in accordance with the formula:

$$Threshold = (D_{max} + D_{min})/2$$

- processing separately each band as follows.

For each band, extract the dimension (within memory) corresponding to higher border DHB,:

If the dimension of the signal at the higher border DHB of the band is lower than the threshold, then the band is occupied higher If the dimension of the signal at the higher border DHB of the band is higher than the threshold, then the band is vacant

The successive processing of each band then results in dividing the spectrum in occupied and vacant bands:

In a second embodiment, the process of the invention computes, for each window being considered, the graph of the dimension of the sub-space represented by the number of significant eigenvalues. After execution of the iterative loops, the whole graph is analysed and the process computes the inversion of the slope of the graph in order to achieve sensing of vacant sub-space.

## Description of the drawings

Other features, objects and advantages of the invention will be made clear when reading the following description and drawings, only given by way of nonrestrictive examples. In the accompanying drawings:

Figure 1a illustrates a general view of a spectrum with different bands of frequencies showing different applications (GSM, UMTS... )

Figure 1b illustrates the general architecture of a terminal adapted to carry out the process of the invention.

Figure 1c illustrates an alternate architecture with a more powerful analog to digital converter.

Figure 2 illustrates a first embodiment of the process providing vacant subspace detection.

Figure 3 illustrates a second alternative embodiment.

Figure 4a and 4b illustrate the flow chart of the scale of confidence used in the process illustrated in figure 2.

Figures 4c-4f illustrate are more schematic diagram of the process of figure 2.

Figure 5a and 5b illustrate the graph of the dimension of the significant subspace of the received signal as a function of the samples which is used in the second embodiment of figure 3.

## Description of the preferred embodiments of the invention

A terminal adapted to incorporate means for carrying out the process described hereinafter particularly may show different practical architectures, in accordance with the level of the processing dedicated to the hardware part or the software part of the terminal.

In one first embodiment, as shown in Figure 1b, an antenna 1 is connected to a hardware RF front-end 2 which performs the conventional RF processing: channel selection, interference cancellation, amplification and generation of a intermediate frequency (IF). A block 3 achieves conversion of the RF signal to an intermediate frequency which is then filtered by a IF filter 4 before being input into an Analog to Digital converter (A/D) 5 for converting the IF signal into digital representations of said signal which can then be forwarded to a Digital Signal Processor (DSP) 6 providing the additional processing of the intermediate frequency signal.

The embodiment shown in figure 1b corresponds to one implementation where the carrier frequency is known.

Alternatively, figure 1c illustrates an embodiment which is adapted for a blind detection. In that case, corresponding to the situation of a unknown carrier, the RF signal generated by a RF filter and front end 12 directly input into a analog to digital converter 15 which , therefore, generates digital representations of the RF signal for its later processing by a - not shown - DSP. Clearly the architecture of Figures 1c shows to be "software" oriented since most RF signal processing is directly performed by the DSP.

The architectures shown in Figure 1b and Figure 1c are two extreme variations of possible embodiments of a terminal, and it should be clear that a skilled man will straightforwardly adapt the architecture shown in Figure 1b or Figure 1c for the purpose of providing a specific combination of hardware and software component that fits the specifications of the analog to digital converter and the DSP being considered. In addition, the particular hardware components, and the software routines which have to be embodied for the purpose of providing an appropriate processing of a RF signal will not be further developed in the present application since they are not part of the present invention.

Whatever the particular architecture of the terminal being used, it should be noticed that, once converted into digital representation, the different samples are forwarded to the DSP for the purpose of executing the processes which are described hereinafter.

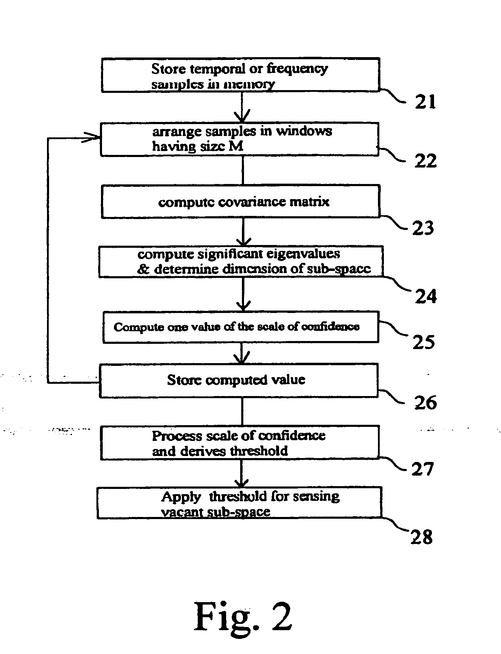

Figure 2 illustrates a first embodiment of a process in accordance with the present invention which allows the sensing of vacant sub-space over the spectrum bandwidth.

The process comprises a first step 21 which are the storage of samples representative of the received signal in a memory (not shown in Figures 1b or Figure 1c), such as a conventional storage for the purpose of its processing by a digital signal processor.

In one embodiment, the samples which are processed are temporal samples generated by the analog to digital converter.

Alternatively, the samples which are stored are representative of frequencies in place of temporal samples.

In both embodiments, the samples which are processed are frequency domain samples generated by the analog to digital converter.

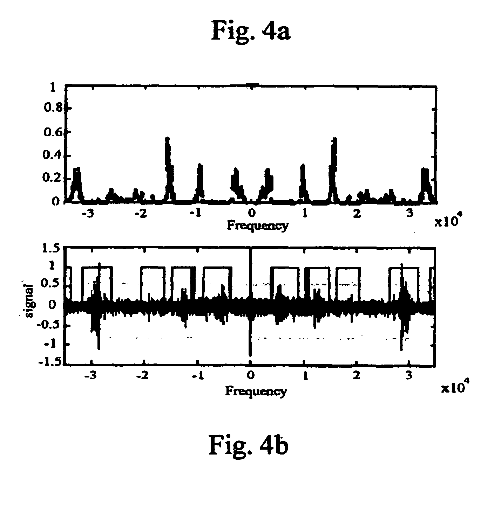

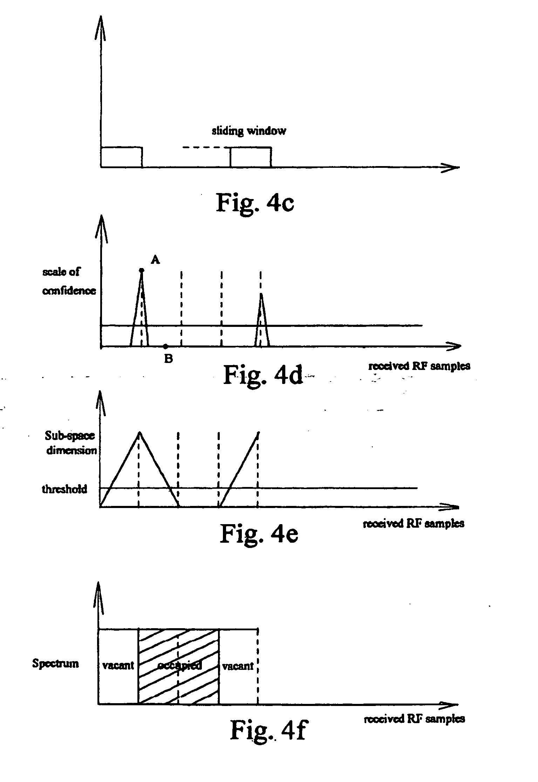

The process then proceeds with a first processing loop which starts with a step 22 consisting in the arrangement of a set of samples - be it temporal or frequency samples - into a window having a size M. It should be noticed that the process is adapted to provide a windows size M which may vary so as to provide an adaptive process. Further, the window is a sliding widow, as illustrated in Figure 4c, in order to provide consecutive processing of M differents set of samples.

In a step 23, the process then proceeds with the computation of a covariance matrix of size M for the window being considered in this first loop. The calculation of a covariance matrix is performed by the digital signal processor in accordance with techniques and algorithm which are well known to the skilled man and which will not be further elaborated on.

The process then proceeds with a step 24 with the diagonalization of such covariance matrix and processing of the latter for the purpose of computing the significant eigenvalues and for determining the dimension of the sub-space represented by the number of significant eigenvalues.

Then, in a step 25, the process then proceeds with the computing, for the particular windows being considered, one particular value corresponding to a rate of confidence of the probability of signal, as illustrated in real Figure 4a, and also illustrated in the theorical diagram of figure 4d. To achieve this, the process compares, for the windows being considered, the signal distribution to a given noise distribution. For this computation, the noise distribution is assumed to be Gaussian for samples and Rayleigh for the magnitude of samples.

It should be noticed that different algorithms or comparison methods can be used for comparing the signal distribution in the considered windows and the Gaussian or Raleigh noise distribution.

In one embodiment, the process uses the conventional AKAIKE INFORMATION THEORETIC (AIC) criterium which is, as known by a skilled man, an effective tool for comparing one distribution to a model.

Alternatively, in a second embodiment, the process may use the so-called Minimum Description Length criterium.

The computation above thus results in the determination of one particular value, as illustrated in figures 4a and 4d, which is representative of a scale of confidence corresponding for the considered window.

The process then proceeds with a step 26 where the computed values of the signal dimension and of the scale of confidence are stored within the memory, what completes the particular loop.

The process then goes back to step 12 where the window is subject of an elementary slide, i.e. a new temporal or frequency sample is incorporate into the current window while another one is extracted from the same window.

The new window is thus properly processed according to steps 22-26 which were described above and so on.

The multiple processing loops which are executed thus entail the progressive building of the different points of the flowchart of figures 4a and 4d showing the scale of confidence where the samples appearing on axis x and the probability of presence or non presence of signal appearing with respect to axis y.

It should be noticed that the successive construction of the chart illustrated in figure 4a also provides, for every point of the scale of confidence, one particular value for the number of significant eigenvalues corresponding to the dimension of the signal sub-space.

One constructed and stored within the memory, the scale of confidence is processed, in a step 27, in order to derive one threshold value corresponding to one dimension which can be used for distinguishing between areas presumed to be vacant and areas presumed to be subject to a signal.

Different embodiments may be considered for processing the scale of confidence.

In a first embodiment, the process operates as follows:

- identification of a maximum of the scale of confidence for the purpose of determining the border of a vacant band, hereinafter referred to as a reference band;
- dividing the spectrum in bands with respect to the previously identified reference band;
- identification of the maximum and the minimum of the values of signal dimension respectively corresponding to the maximum (point A in figure 4d) and minimum values (point B of the figure 4d) of the scale of the confidence;
- returning respective corresponding dimensions, respectively $D_{max}$ and $D_{min}$ of the significant subspace;
- computing the threshold in accordance with the formula:

$$Threshold = (D_{max} + D_{min}) / 2$$

Once computed in step 27, the threshold value can be utilized in a step 28 for processing separately each band as follows, by means of a second loop applied to every band.

Indeed, for each band, the dimension of the sub space that corresponds to the higher border DHB is read and a test is performed in order to compare said dimension with the previously computed threshold.

If the dimension of the signal at the higher border DHB of the band is lower than the threshold, then the band is presumed to be occupied higher If the dimension of the signal at the higher border DHB of the band is higher than the threshold, then the band is vacant

The successive processing of each band then results in dividing the spectrum in occupied and vacant bands;

In a second embodiment, the scale of confidence is processed, in a step 27. in order to compute two groups of scale. To achieve this, a predetermined level - e.g. corresponding to a value of 10% of the maximum value of the scale of confidence - is set in order to distribute all the points of scale of confidence between group I and group II.

Group I comprises all the samples for which the scale of confidence is superior than said predetermined level. Group I corresponds to a zone which is presumably considered to be vacant

Group II comprises all the samples showing a scale or indicia of confidence is inferior than the above mentioned predetermined level. Group II corresponds to areas being presumably occupied by one signal.

Once distributed between two groups I and II, each group is separately processed for the purpose of returning of particular dimensions associated to its groups, namely $D_I$ and $D_{II}$.

For group I, $D_I$ is computed by calculating a value representative of all the dimensions of the points of the scale of confidence of Figure 4a which are assigned to group I. In particular, the process may consider the mean value, the mediant or any weighted combination of the different values of the dimensions of points of group I.

The value of $D_{II}$ is similarly computed from the different points (samples) belonging to the second group II.

The threshold value is then computed in accordance with the following formula:

$$Threshold = (D_I + D_{II}) / 2$$

Clearly, the algorithm described with respect to the first and second embodiment above are only examples of different processing treatments allowing to return one particular value for a threshold which can be used for discriminating between vacant subspace and signal.

Once computed, the threshold value can be used in a sten 28 for determining the presence of a signal or sensing vacant sub-space. This is performed, as explained above with respect to steps 21-24 by the computation of the covariance matrix and the determination of the number of significant eigenvalues, thus resulting to the dimension of the subspace which can thus be compared to the above mentioned threshold.

The process which was described in reference to figure 2 was based on the construction and exploitation of a scale of confidence in order to derive one threshold which can be used for comparing the dimensions of the sub-space or the number of independent eigenvectors.

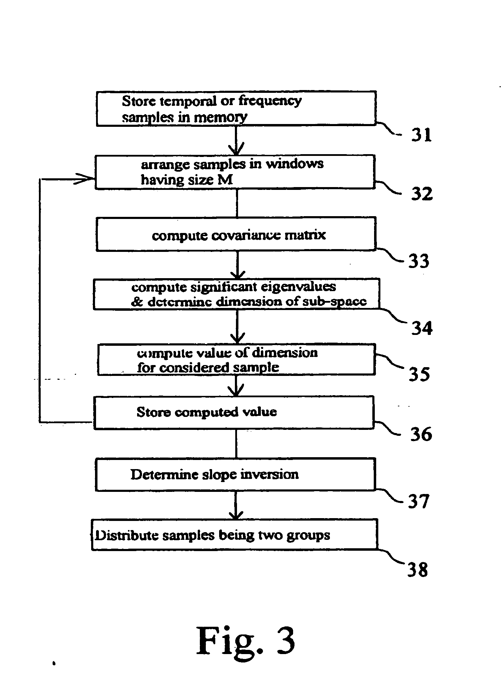

Figure 3 illustrates another advantageous algorithm which does not take use of the scale of confidence which was described above.

In the method of figure 3, the process proceeds with the computation of the graph of the dimensions of the significant sub-space of the signal being observed, in view of the detection of any changes in the slope of said curve.

The process of figure 3 comprises a sequence of steps 31-34 which are similar to the corresponding steps 21-24 of the process of figure 2.

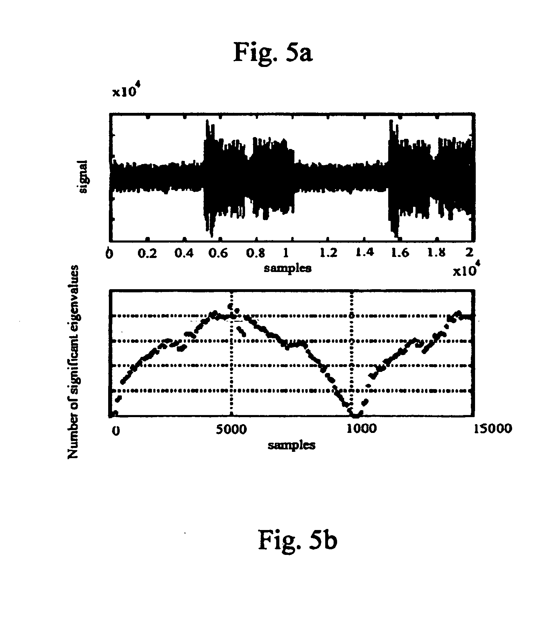

However, instead of computing one point of the scale of confidence in accordance with step 25 of figure 2, the alternative embodiment of the process computes one point of the curve of the dimension of the significant sub-space of the received signal, as illustrated in figure 5b. Different techniques may be used for achieving this calculation based on a comparison, for the particular window being considered, of the distribution of the signal and the distribution of the noise. Again, for this computation, the noise distribution is assumed to be gaussian or Rayleigh.

In one particular technique, the process uses the conventional AKAIKE INFORMATION THEORETIC (AIC) criterium while, in another alternative technique, the process takes advantage of the Minimum Description Length criterium.

The use of those techniques allows the computation of one particular point of the graph of figure 5b which shows, along axis x-x', the samples of the received signal and, along axis y-y', the dimension of the significant sub-space of the signal received.

After the completion of the particular dimension for the considered window, the process then proceeds to end of loop step 36 and goes back to step 32 so as to let the considered window being slipped of one step for the purpose of a new computation of one point of graph of figure 5b.

After completion of the execution of loop steps 32 - 36 for a wide number of windows, the whole graph of figure 5b is stored within the memory and the process then proceeds to a step 37 where the slope of the graph is computed and the particular inversion of the slopes are being determined.

The analysis of the slope inversion are used so as to distribute the samples between two groups, namely a first group corresponding to samples presumably with signal and a second group of samples presumably corresponding to vacant sub-space.

**Claims**

1. Process for sensing vacant sub-space over the spectrum bandwidth of a received signal comprising the following steps:

- sampling and storing (21) samples of said signal;
- arranging (22) said samples in a windows of predetermined size;
- entering into a loop (22, 23, 24) for computing a covariance matrix for the purpose of computing the significant eigenvalues and for determining the dimension of the sub-space represented by the number of significant eigenvalues;
- processing (25) said covariance matrix for the purpose of compute one value, corresponding to said considered window, which is representative of a scale of confidence of the probability of signal;
- ending said loop (26) and reiterating said loop until the completion of said scale of confidence;
- processing. (27) said scale of confidence in order to derive one threshold value corresponding to one dimension which can be used for distinguishing between areas presumed to be vacant and areas presumed to be subject to a signal

2. Process according to claim 1 **characterized in that** said samples are representative of temporal samples.

3. Process according to claim 1 **characterized in that** said samples are representative of frequency samples.

4. Process according to claim 1 **characterized in that** the noise distribution is assumed to be gaussian for samples.

5. Process according to claim 1 **characterized in that** the noise distribution is assumed to be Rayleigh for the magnitude of samples.

6. Process according to claim 1 **characterized in that** said computation of the scale of confidence is based on the AKAIKE INFORMATION THEORITICS (AIC) criterium.

7. Process according to claim 1 **characterized in that** said computation of the scale of confidence is based on the Minimum Description Length (M.D.L) criterium.

8. Process according to claim 1 **characterized in that** said processing of the scale of confidence comprises the steps of:

- identification of a maximum of the scale of confidence for the purpose of determining the border of a vacant band, labeled a reference band;
- dividing the spectrum in bands with respect to said reference band;

- identification of the maximum and the minimum of the values of signal dimension respectively corresponding to the maximum and minimum values of the scale of the confidence;
- returning respective corresponding dimensions, respectively $D_{max}$ and $D_{min}$ of the significant sub-space;
- computing the threshold in accordance with the formula:

$$Threshold = (D_{max} + D_{min}) / 2$$

- processing separately each band as follows:
- extract the dimension) corresponding to higher border DHB,:

  If the dimension of the signal at the higher border DHB of the band is lower than the threshold, then identifying the band to be occupied; higher If the dimension of the signal at the higher border DHB of the band is higher than the threshold, then identifying the band to be vacant.

**9.** Process according to claim 1 **characterized in that** said processing of the scale of confidence comprises the steps of:

  - distributing the samples between a first and a second group (Group I, Group II), said first group comprising all the samples showing a rate of confidence superior a predetermined level , said second group corresponding to samples showing a rate of confidence inferior than said predetermined value;
  - processing separately each of said first and second group for deriving one particular dimension $D_I$ and $D_{II}$ associated to each group;
  - computing said threshold value from said dimensions $D_I$ and $D_{II}$.

**10.** Process for sensing vacant sub-space over the spectrum bandwidth of a received signal comprising the following steps:

  - sampling and storing (31) samples of said signal;
  - arranging (32) said samples in a windows of predetermined size;
  - entering into a loop (32, 33, 34) for computing a covariance matrix for the purpose of computing the significant eigenvalues and for determining the dimension of the sub-space represented by the number of significant eigenvalues;
  - processing (35) said covariance matrix for the purpose of computing one point of the graph of the dimensions of the significant sub-space of the signal being observed;
- ending said loop (36) and reiterating said loop until the completion of the construction of said graph;
- determining the inversion of slopes in said graph (37) in order to distinguish between areas presumed to be vacant and areas presumed to be subject to a signal

**Patentansprüche**

**1.** Verfahren zum Erfassen von freiem Unterraum in der Spektrumbandbreite eines empfangenen Signals, aufweisend die folgenden Schritte:

  - Abtasten und Speichern (21) der Abtastungen besagter Signale;
  - Anordnen (22) der Abtastungen in einem Fenster vorbestimmter Größe;
  - Eingeben in eine Schleife (22, 23, 24) zur Berechnung einer Kovarianzmatrix zum Zwecke der Berechnung wesentlicher Eigenwerte und zum Bestimmen der Dimension des Unterraums, der durch die Zahl der wesentlichen Eigenwerte wiedergegeben wird;
  - Verarbeiten (25) der Kovarianzmatrix zum Zwecke der Berechnung eines Werts, welcher dem betrachteten Fenster entspricht, welches repräsentativ für eine Vertrauensskala der Wahrscheinlichkeit des Signals;
  - Beenden der Schleife (26) und Wiederholung der Schleife bis zur Vervollständigung der Vertrauensskala;
  - Verarbeiten (27) der Vertrauensskala, um einen Schwellwert herzuleiten, der einer Dimension entspricht, welcher verwendet werden kann, um zwischen als leer angenommenen Bereichen und Bereichen, von denen angenommen wird, dass sie einem Signal ausgesetzt werden, zu unterscheiden.

**2.** Verfahren nach Anspruch 1, **dadurch gekennzeichnet, dass** die Abtastungen temporäre Abtastungen repräsentieren.

**3.** Verfahren nach Anspruch 1, **dadurch gekennzeichnet, dass** die Abtastungen Frequenzabtastungen repräsentieren.

**4.** Verfahren nach Anspruch 1, **dadurch gekennzeichnet, dass** die Rauschverteilung der Abtastungen als Gaussverteilung angenommen wird.

**5.** Verfahren nach Anspruch 1, **dadurch gekennzeichnet, dass** die Rauschverteilung der Größe der Abtastungen als Rayleighverteilung angenommen wird.

6. Verfahren nach Anspruch 1, **dadurch gekennzeichnet, dass** die Berechnung der Vertrauensskala auf den AKAIKE INFORMATIONSTHEORIE (AIC) Kriterium basiert.

7. Verfahren nach Anspruch 1, **dadurch gekennzeichnet, dass** die Berechnung der Vertrauensskala auf dem Minimum Description Length (M.D.L.) Kriterium basiert.

8. Verfahren nach Anspruch 1, **dadurch gekennzeichnet, dass** das Bearbeiten der Vertrauensskala die Schritte aufweist:

> - Identifikation eines Maximums der Vertrauensskala zum Zwecke der Bestimmung der Grenze eines leeren Bandes, das als Referenzband bezeichnet wurde;
> - Teilen des Spektrums in Bänder in Bezug auf das Referenzband;
> - Identifikation des Maximums und des Minimums der Werte einer Signaldimension entsprechend den Maximal- und Minimalwerten der Vertrauensskala;
> - Zurückführen der jeweiligen entsprechenden Dimensionen, insbesondere $D_{max}$ und $D_{min}$ des maßgeblichen Unterraums;
> - Berechnen des Schwellwerts entsprechend der Formel:

$$Schwellwert = (D_{max} + D_{min}) / 2$$

> - getrenntem Verarbeiten jedes Bandes wie folgt:
> - Extrahieren der Dimension entsprechend dem höheren Rand DHB:

> > Wenn die Dimension des Signals am höheren Rand DHB des Bandes kleiner als der Schwellwert ist, dann Identifikation des zu besetzenden Bandes;
> > Wenn die Dimension des Signals am höheren Rand DHB des Bandes größer als der Schwellwert ist, dann Identifikation des Bandes als leer.

9. Verfahren nach Anspruch 1, **dadurch gekennzeichnet, dass** das Bearbeiten der Vertrauensskala die Schritte aufweist:

> - Verteilen der Abtastungen auf eine erste und eine zweite Gruppe (Group 1, Group II), wobei die erste Gruppe alle Abtastungen enthält, die eine Vertrauensrate größer als ein vorbestimmter Level hat, die zweite Gruppe allen Abtastungen entspricht, die eine Vertrauensrate kleiner als der vorbestimmte Level hat;
> - getrenntes Verarbeiten jeder der ersten und zweiten Gruppe, um eine spezielle Dimension $D_I$ bzw. $D_{II}$ abzuleiten, die mit jeder Gruppe in Zusammenhang steht;
> - Berechnen des Schwellwerts aus den Dimensionen $D_I$ und $D_{II}$

10. Verfahren zum Erfassen von freiem Unterraum in der Spektrumbandbreite eines empfangenen Signals, aufweisend die folgenden Schritte:

> - Abtasten und Speichern (31) der Abtastungen besagter Signale;
> - Anordnen (32) der Abtastungen in einem Fenster vorbestimmter Größe;
> - Eingeben in eine Schleife (32, 33, 34) zur Berechnung einer Kovarinzmatrix zum Zwecke der Berechnung wesentlicher Eigenwerte und zum Bestimmen der Dimension des Unterraums, der durch die Zahl der wesentlichen Eigenwerte wiedergegeben wird;
> - Verarbeiten (35) der Kovarianzmatrix zum Zwecke der Berechnung eines Punkts des Graphen der Dimensionen des wesentlichen Unterraumes des des überwachten Signals;
> - Beenden der Schleife (36) und Wiederholung der Schleife bis zur Vervollständigung des Graphen;
> - Bestimmen der Steigungsumkehr im Graphen (37), um zwischen als leer angenommenen Bereichen und Bereichen, von denen angenommen wird, dass sie einem Signal ausgesetzt werden, zu unterscheiden.

## Revendications

1. Procédé pour la détection de sous-espaces vacants sur la bande passante du spectre d'un signal reçu comportant les étapes suivantes :

> - l'échantillonnage et le stockage (21) d'échantillons dudit signal ;
> - la disposition (22) desdits échantillons en une fenêtre présentant une dimension prédéterminée ;
> - l'entrée dans une boucle (22, 23, 24) pour le calcul d'une matrice de covariance dans le but de calculer les valeurs propres significatives et de déterminer la dimension du sous-espace représenté par le nombre de valeurs propres significatives ;
> - le traitement (25) de ladite matrice de covariance dans le but de calculer une valeur correspondant à ladite fenêtre considérée, laquelle est représentative d'une échelle de confiance de la probabilité du signal ;

- l'achèvement de ladite boucle (26) et la réitération de ladite boucle jusqu'à l'accomplissement de ladite échelle de confiance ;

- le traitement (27) de ladite balance de confiance dans le but de déterminer une valeur de seuil correspondant à une dimension qui peut être utilisée dans le but de distinguer des espaces supposés vacants et des espaces présumés occupés par un signal.

2. Procédé selon la revendication 1 **caractérisé en ce que** lesdits échantillons sont représentatifs des échantillons temporels.

3. Procédé selon la revendication 1 **caractérisé en ce que** lesdits échantillons sont représentatifs des échantillons fréquentiels.

4. Procédé selon la revendication 1 **caractérisé en ce que** la distribution de bruit est supposée être Gaussienne..

5. Procédé selon la revendication 1 **caractérisé en ce que** la distribution de bruit est supposé être suivant une loi de Rayleigh en ce qui concerne l'amplitude des échantillons.

6. Procédé selon la revendication 1 **caractérisé en ce que** ledit calcul de l'échelle confiance est basé sur le critérium d' AKAIKE INFORMATION THEORITICS (AIC).

7. Procédé selon la revendication 1 **caractérisé en ce que** ledit calcul de l'échelle de confiance est basé sur le critère de longueur de description minime (M.D.L.).

8. Procédé selon la revendication 1 **caractérisé en ce que** le traitement de l'échelle de confiance comporte les étapes :

   - d'identification d' un maximum de l'échelle de confiance afin de déterminer la frontière d' une bande vacante , identifiée comme bande de référence.
   - de division du spectre en bandes par rapport à ladite bande de référence ;
   - l'identification du maximum et du minimum des valeurs de la dimension du signal correspondant respectivement au maximum et au minimum valeurs de l'échelle de confiance ;
   - la génération de dimensions respectives correspondantes, respectivement $D_{max}$ et $D_{min}$ du sous-espace significatif ;
   - le calcul du seuil suivant la formule :

$$\text{Valeur de seuil} = (D_{max} + D_{min})/2$$

- le traitement séparé de chaque bande comme suit :
- l'extraction de la dimension correspondant à la frontière supérieure DHB :

   si la dimension du signal à la frontière supérieure DHB de la bande est inférieure à la valeur de seuil, alors l'identification de la bande comme étant occupée,
   si la dimension du signal à la frontière supérieure DHB de la bande est supérieure à la valeur de seuil, alors l'identification de la bande comme étant vacante

9. Procédé selon la revendication 1 **caractérisé en ce que** ladite traitement de l'échelle de confiance comporte les étapes de :

   - distribution des échantillons entre un premier et un second groupe (Group 1, Group II), ledit premier groupe comportant tout les échantillons montrant un taux de confiance supérieur d' un niveau prédéterminé, ledit second groupe correspondant aux échantillons montrant un taux de confiance inférieur à la ladite valeur prédéterminés,
   - le traitement séparé de chacun desdits premier et second groupe dans le but de calculer une dimension $D_I$ and $D_{II}$ particulière associée à chaque groupe ;
   - le calcul de ladite valeur de seuil pour les lesdites dimensions $D_I$ and $D_{II}$.

10. Procédé pour détecter un sous-espace vacant sur la bande passante de spectre d'un signal reçu comportant les étapes suivantes :

    - l'échantillon et le stockage (31) des échantillons dudit signal ;
    - la disposition (32) desdits échantillons dans des fenêtres de dimension prédéterminée ;
    - l'entrée dans une boucle (32, 33, 34) pour le calcul d'une matrice de covariance dans le but de calculer les valeurs propres significatives et pour la détermination de la dimension du sous-espace représenté par le nombre de valeurs propres significatives ;
    - le traitement de (35) ladite matrice de covariance afin de calculer un point du graphe des dimensions du sous-espace significatif du signal observé. ;
    - l'achèvement de ladite boucle (36) et la réitération de ladite boucle jusqu'à l'accomplissement de la construction dudit graphe ;

- la détermination de l'inversion des pentes dudit graphe (37) afin de distinguer des espaces présumés vacants et des espaces présumés occupés par un signal.

Fig.1A

Fig.1B

Fig.1C

Store temporal or frequency
samples in memory — 21

arrange samples in windows
having size M — 22

compute covariance matrix — 23

compute significant eigenvalues
& determine dimension of sub-space — 24

Compute one value of the scale of confidence — 25

Store computed value — 26

Process scale of confidence
and derives threshold — 27

Apply threshold for sensing
vacant sub-space — 28

# Fig. 2

Store temporal or frequency
samples in memory
31

arrange samples in windows
having size M
32

compute covariance matrix
33

compute significant eigenvalues
& determine dimension of sub-space
34

compute value of dimension
for considered sample
35

Store computed value
36

Determine slope inversion
37

Distribute samples being two groups
38

# Fig. 3

## Fig. 4a

## Fig. 4b

sliding window

## Fig. 4c

scale of
confidence

A

B

received RF samples

## Fig. 4d

Sub-space
dimension

threshold

received RF samples

## Fig. 4e

Spectrum | vacant | occupied | vacant

received RF samples

## Fig. 4f

# Fig. 5a

# Fig. 5b

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **H. Urkowitz.** Energy detection of unknown deterministic signals. *Proceeding of the IEEE,* April 1967, vol. 55, 523-531
- **A. V. Dandwat ; GF. B. Giannakis.** Statistical tests for presence of cyclostationarity. *IEEE Transactions on Signal Processing,* September 1994, vol. 42 (9), 2355-2369

- Cognitive Radio Sensing Information-Theoretic Criteria based. *IEEE conference CrownCom 2007,* 2007